# EUROPEAN PATENT APPLICATION

(11) **EP 4 657 568 A1**
(43) Date of publication of application: **03.12.2025**
(21) Application number: 24747235.0
(22) Date of filing: 22.01.2024
(51) Int. Cl.: H01M 4/525, H01M 4/505

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(30) Priority: 26.01.2023 JP 2023010070
(71) Applicant: Panasonic Energy Co., Ltd., Osaka 570-8511 (JP)
(72) Inventor: IKEUCHI, Issei, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2024/001565
(87) International publication number: WO 2024/157907

(57) **Abstract**

This positive electrode active material is a composite oxide having a crystal structure belonging to a space group R-3m and represented by a composition formula of Li₁₊ₐNi_{b}Mn_{c}X_{d}Oₑ, in which: X is at least one type selected from the group consisting of typical elements and transition metal elements other than Li, Ni, and Mn; a≤1.15, 0.35≤b≤0.70, 0.30≤c≤0.65, and 0≤d≤0.07 are satisfied; and e is a value satisfying electrical neutrality. The positive electrode active material has a value (α×β) of 0.090 or lower, which is the product of a Ni mixing rate α determined through Rietveld analysis and a strain β determined using the Williamson-Hall method.

## Description

### TECHNICAL FIELD

The present disclosure relates to a positive electrode active material for a non-aqueous electrolyte secondary battery and a non-aqueous electrolyte secondary battery using this positive electrode active material.

### BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni or Mn is generally used. The type and added amounts of elements contained in the lithium-transition metal composite oxide, the crystal structure of the composite oxide, and the like significantly affect the battery performance, and even a slight change in these physical properties may fail to achieve the desired performance.

For example, Patent Literatures 1 to 3 disclose that the lattice strain of a crystal structure of a positive electrode active material is focused to improve battery performance, such as charge-discharge cycle characteristics, by controlling the strain within a specific range.

### CITATION LIST

### PATENT LITERATURE

PATENT LITERATURE 1: Japanese Unexamined Patent Application Publication No. 2004-253169
PATENT LITERATURE 2: Japanese Unexamined Patent Application Publication No. 2013-091581
PATENT LITERATURE 3: Japanese Unexamined Patent Application Publication No. 2016-188168

### SUMMARY

In recent years, non-aqueous electrolyte secondary batteries, such as lithium-ion secondary batteries, have been used as power sources for driving vehicles, and required to have even higher capacities. The positive electrode active materials of Patent Literatures 1 to 3 still have much room for improvement from the viewpoint of an increase in capacity.

A positive electrode active material for a non-aqueous electrolyte secondary battery according to the present disclosure is a positive electrode active material for a non-aqueous electrolyte secondary battery, having a crystal structure belonging to the space group R-3m, and being represented by a compositional formula Li₁₊ₐNi_{b}Mn_{c}X_{d}Oₑ, wherein X represents at least one selected from the group consisting of transition metal elements and main-group elements other than Li, Ni and Mn; a ≤ 1.15, 0.35 ≤ b ≤ 0.70, 0.30 ≤ c ≤ 0.65, and 0 ≤ d ≤ 0.07 are satisfied; and e is a value satisfying electroneutrality, wherein a product (α × β) of a mixing ratio α of Ni determined by Rietveld analysis and a strain β determined by Williamson-Hall method is less than or equal to 0.090.

A non-aqueous electrolyte secondary battery according to the present disclosure comprises: a positive electrode including the above positive electrode active material; a negative electrode; and a non-aqueous electrolyte.

According to the positive electrode active material of the present disclosure, increase in capacity of the non-aqueous electrolyte secondary battery can be achieved.

### BRIEF DESCRIPTION OF DRAWING

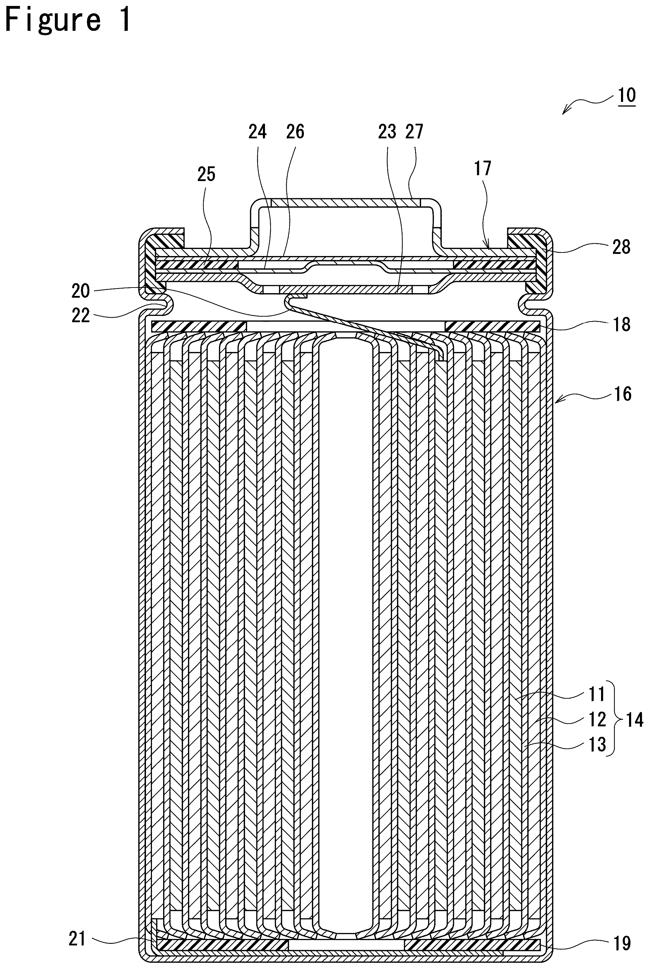

FIG. 1 is a longitudinal sectional view of a non-aqueous electrolyte secondary battery of an example of an embodiment.

### DESCRIPTION OF EMBODIMENTS

As a result of intensive studies aimed at increasing the capacity of a non-aqueous electrolyte secondary battery, the present inventors have found that the charge-discharge capacity of the battery significantly increases when a positive electrode active material having a crystal structure belonging to the space group R-3m has a value (α × β) of less than or equal to 0.090, which is a product of a mixing ratio α indicating the proportion of Ni entering a Li site of the crystal structure and a strain β indicating the non-uniformity of the spacing of the crystal lattice planes. The present inventors have finally found that the mixing ratio α and strain β significantly affect the discharge capacity in a layered rock-salt structure belonging to the space group R-3m, and the discharge capacity is specifically improved by controlling the value of α × β to be less than or equal to 0.090.

In particular, when the content rate of Ni is less than or equal to 70 mol% based on the total number of moles of metal elements excluding Li, the influence of the mixing ratio α and the strain β on the discharge capacity becomes large, and the effect of controlling the value of α × β to less than or equal to 0.090 becomes remarkable. From the viewpoints of reducing the material cost of the battery and the like, a reduction in the Ni content rate of the positive electrode active material is required. However, lowering the Ni content rate makes it difficult to increase the capacity of the battery. A positive electrode active material according to the present disclosure is extremely useful for achieving both low cost and high capacity of a battery. Since the value of α × β varies significantly depending on synthesis conditions of the positive electrode active material, adjustment of the value of α × β to the desired value cannot be realized unless the synthesis conditions are strictly controlled by paying attention to this value.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The non-aqueous electrolyte secondary battery 10 is, for example, a lithium-ion secondary battery. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of greater than or equal to two thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode 11, will be described in detail.

### [Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is greater than or equal to 0.1 mass% and less than or equal to 5 mass% relative to the mass of the positive electrode mixture layer, for example.

The positive electrode active material is a lithium-transition metal composite oxide having a crystal structure belonging to the space group R-3m, the lithium-transition metal composite oxide represented by the compositional formula Li₁₊ₐNi_{b}Mn_{c}X_{d}Oₑ. In the compositional formula, X represents at least one selected from the group consisting of transition metal elements and main-group elements other than Li, Ni and Mn, a ≤ 1.15, 0.35 ≤ b ≤ 0.70, 0.30 ≤ c ≤ 0.65, and 0 ≤ d ≤ 0.07 are satisfied, and e is a value satisfying electroneutrality. The composite oxide constituting the positive electrode active material contains Li, Ni and Mn as essential elements. The composition of the positive electrode active material can be measured using an ICP optical emission spectrometer (for example, iCAP6300, manufactured by Thermo Fisher Scientific Inc.).

The positive electrode active material has a layered rock-salt structure belonging to the space group R-3m, a composition satisfying the above compositional formula, and a value (α × β) of less than or equal to 0.090, which is a product of the mixing ratio α indicating the proportion of Ni entering the Li site of the crystal structure as determined by Rietveld analysis and the strain β indicating the non-uniformity of the spacing of the crystal lattice planes as determined by Williamson-Hall method, is less than or equal to 0.090. When the value of α × β is less than or equal to 0.090, the charge-discharge capacity is specifically improved.

In the compositional formula Li₁₊ₐNi_{b}Mn_{c}X_{d}Oₑ, the mole ratio (b) of Ni is greater than or equal to 0.35 and less than or equal to 0.70 (0.35 ≤ b ≤ 0.70). In addition, the mole ratio (c) of Mn is greater than or equal to 0.30 and less than or equal to 0.65 (0.30 ≤ c ≤ 0.65). In this case, both low cost and high capacity of the battery can be achieved, and the effect of improving the discharge capacity can be obtained by controlling the value of α × β to be less than or equal to 0.090. The content rate of Ni is greater than or equal to 35 mol% and less than or equal to 70 mol% based on the total number of moles of the metal elements excluding Li, and preferably greater than or equal to the content rate of Mn.

The mole ratio (b) of Ni is preferably greater than or equal to 0.40, more preferably greater than or equal to 0.45, and particularly preferably greater than or equal to 0.50 from the viewpoints of further increase in the capacity and the like. In addition, the mole ratio (b) of Ni is preferably less than or equal to 0.65, and more preferably less than or equal to 0.60 from the viewpoints of material cost reduction and the like. An example of a preferable range of the mole ratio (b) of Ni satisfies 0.45 ≤ b ≤ 0.65 or 0.50 ≤ b ≤ 0.60. In this case, both low cost and high capacity can be achieved at a higher level.

The mole ratio (c) of Mn is preferably greater than or equal to 0.35, and more preferably greater than or equal to 0.40, and the mole ratio (c) of Mn is preferably less than or equal to 0.60. An example of a preferable range of the mole ratio (c) of Mn satisfies 0.35 ≤ b ≤ 0.60 or 0.40 ≤ b ≤ 0.60. In this case, both low cost and high capacity can be achieved at a higher level.

In the compositional formula Li₁₊ₐNi_{b}Mn_{c}X_{d}Oₑ, X represents, for example, at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al. When X is added in a small amount, the effect of improving the charge-discharge capacity becomes more remarkable. Among these, at least one selected from the group consisting of Al and Co is preferable. The mole ratio (d) of X is preferably less than or equal to 0.07 (0 ≤ d ≤ 0.07), and more preferably less than or equal to 0.05, and particularly preferably less than or equal to 0.03.

In the compositional formula Li₁₊ₐNi_{b}Mn_{c}X_{d}Oₑ, the mole ratio (e) of O is a value satisfying electroneutrality, i.e., the valence of O in the positive electrode active material. The mole ratio (e) of O is, for example, greater than or equal to 2.00 and less than or equal to 2.15 (2.00 ≤ e ≤ 2.15).

The positive electrode active material contains, as a main component, a composite oxide (hereinafter referred to as a "Li-Ni-Mn composite oxide") having a composition represented by the above compositional formula and a value α × β of less than or equal to 0.090, where the main component means a component having the highest mass ratio among constituent components of the positive electrode active material. In a mixture layer of the positive electrode 11, a composite oxide other than the Li-Ni-Mn composite oxide may be used in combination as the positive electrode active material, and the content of the Li-Ni-Mn composite oxide is preferably greater than or equal to 50 mass%, and may be substantially 100 mass%.

The Li-Ni-Mn composite oxide is formed of, for example, secondary particles each formed by aggregation of a plurality of primary particles. The Li-Ni-Mn composite oxide has a volume-based median diameter (D50) of greater than or equal to 1 µm and less than or equal to 30 µm, or greater than or equal to 3 µm and less than or equal to 20 µm, for example. The D50 of the composite oxide is a particle diameter at which the volume integrated value is 50% in particle size distribution measured by a laser diffraction scattering method. A BET specific surface area of the Li-Ni-Mn composite oxide is, for example, greater than or equal to 0.1 m²/g and less than or equal to 10 m²/g, or greater than or equal to 0.5 m²/g and less than or equal to 5 m²/g. The BET specific surface area of the composite oxide is measured according to a BET method (nitrogen adsorption method) described in JIS R1626. When the D50 and the BET specific surface area are within the range, the capacity can be easily increased.

As described above, the Li-Ni-Mn composite oxide has a layered rock-salt structure belonging to the space group R-3m, and a product (α × β) of a mixing ratio α of Ni and a strain β is less than or equal to 0.090. The mixing ratio α of Ni, which is a proportion of the amount of Ni in the Li layer of the layered rock-salt structure relative to the total amount of Ni, is determined by Rietveld analysis. The strain β, which indicates the non-uniformity of the spacing of lattice planes of the crystal, is determined by Williamson-Hall method.

The powder X-ray diffraction pattern of the Li-Ni-Mn composite oxide is obtained using a desktop X-ray diffraction apparatus (manufactured by Rigaku Corporation, product name "MiniFlex600"). The diffracted X-ray is detected with a high-speed one dimensional detector (D/teX Ultra2).

The measurement conditions with the X-ray diffraction apparatus are as follows.
X-Ray Source: CuKα ray
Tube Voltage: 40 kV
Tube Current: 15 mA
Divergence Slit (DS): 1/4°
Scattering Slit (SS): 13 mm (open)
Receiving Slit (RS): 8 mm
Scanning Axis: 2θ/θ
Scanning Method: Continuous mode
2θ Scanning Range: 10-80°
Scanning Rate: 10°/min
Step Size: 0.02°

The mixing ratio α in the crystal structure of the Li-Ni-Mn composite oxide is calculated by dividing the amount of Ni in the Li site refined by Rietveld analysis using analysis software "Smartlab Studio 2" manufactured by Rigaku Corporation by the total amount of Ni in the structure. The Li site herein in the Rietveld analysis is defined as the 3b site (0, 0, 0.5) in the layered rock-salt structure (R-3m), and the transition metal site is defined as the 3a site (0, 0, 0). The strain β of the crystal structure of the Li-Ni-Mn composite oxide is calculated by Williamson-Hall method using 003, 101, 104, 015, 113 diffraction lines in Smartlab Studio 2.

In the Li-Ni-Mn composite oxide, the product (α × β) of the mixing ratio α and the strain β may be less than or equal to 0.090, preferably less than or equal to 0.072, more preferably less than or equal to 0.055. A lower limit of the value of α × β is not particularly limited, but is preferably greater than or equal to 0.002, more preferably greater than or equal to 0.005. An example of a preferable range of the value of α × β is greater than or equal to 0.002 and less than or equal to 0.072, or greater than or equal to 0.005 and less than or equal to 0.055. In this case, both low cost and high capacity can be achieved at a higher level.

As the Ni content in the Li-Ni-Mn composite oxide changes, the preferable value of α × β also slightly changes. In the compositional formula Li₁₊ₐNi_{b}Mn_{c}X_{d}Oₑ, when the mole ratio (b) of Ni is greater than or equal to 0.35 and less than or equal to 0.55, the value of α × β is, for example, greater than or equal to 0.035 and less than or equal to 0.090, or greater than or equal to 0.040 and less than or equal to 0.055. When the mole ratio (b) of Ni is greater than 0.55 and less than or equal to 0.70, the value of α × β is, for example, greater than or equal to 0.002 and less than or equal to 0.040, or greater than or equal to 0.005 and less than or equal to 0.035.

The mixing ratio α is preferably greater than or equal to 0.05 and less than or equal to 0.20. The strain β is preferably greater than or equal to 0.02 and less than or equal to 0.50, and more preferably greater than or equal to 0.05 and less than or equal to 0.30. When the value of α × β is within the above range and each value of the mixing ratio α and the strain β is within the above range, the effect of improving the charge-discharge capacity becomes more remarkable.

The Li-Ni-Mn composite oxide can be synthesized, for example, by mixing a composite hydroxide or composite oxide containing Ni, Mn or the like with a lithium raw material and calcining the mixture. The composite hydroxide containing Ni, Mn, or the like may be obtained by adding a solution of an alkali such as sodium hydroxide dropwise to a stirred solution of metal salts containing Ni, Mn, or the like to adjust a pH on the alkali side (for example, greater than or equal to 8.5 and less than or equal to 12.5) for precipitation (coprecipitation). Note that the composite hydroxide is calcined to obtain a composite oxide containing Ni, Mn, and the like.

Examples of the lithium raw material include Li₂CO₃, LiOH, Li₂O₂, Li₂O, LiNO₃, LiNO₃, Li₂SO₄, LiOH·H₂O, LiH, or LiF. The composite hydroxide or composite oxide containing Ni, Mn, or the like and the lithium raw material are preferably mixed at a ratio so that a mole ratio between Li and a total amount of metal elements such Ni and Mn is 1:1.01 to 1:1.12.

In controlling the value of α × β, for example, calcining conditions are important. That is, in the synthesizing step of the Li-Ni-Mn composite oxide, a mixture of the above raw materials needs to be calcined so that the value of α × β is less than or equal to 0.090. The mixture of the raw materials is calcined in the atmosphere or in an oxygen stream using a calcining furnace. The calcining temperature is preferably greater than or equal to 800°C when the content rate of Ni is about 50 mol% based on the total number of moles of the metal elements in the composite oxide, provided that the required calcining temperature varies depending on the composition of the raw materials such as the content rate of Ni. For example, when the content rate of Ni increases, the calcining temperature may be lowered. Therefore, adjustment of the value of α × β to the desired value cannot be realized unless the conditions are strictly controlled by paying attention to this value.

The calcining temperature is preferably greater than or equal to 800°C and less than or equal to 1100°C when the content rate of Ni is about 50 mol%. The temperature rising rate is, for example, greater than or equal to 0.3°C/min and less than or equal to 3.0°C/min, or greater than or equal to 0.5°C/min and less than or equal to 2.0°C/min. The calcining time may be greater than or equal to 3 hours and less than or equal to 10 hours. Herein, the calcining time means the time from when the temperature of the calcining furnace reaches the highest temperature of the calcining step until the calcination is completed and cooling starts. The calcined product may be rapidly cooled in the atmosphere by being removed from the calcining furnace. The Li-Ni-Mn composite oxide is obtained, for example, by rapidly cooling a calcined product in the atmosphere, washing with water and drying the calcined product as necessary, followed by pulverization by a known method.

When the content rate of Ni in the composite hydroxide or composite oxide containing Ni, Mn or the like is greater than or equal to 35 mol% and less than or equal to 55 mol%, the calcining temperature is preferably greater than or equal to 900°C and less than or equal to 1000°C. In this case, for example, when the calcining temperature is 850°C, the value of α × β cannot be adjusted to less than or equal to 0.090, resulting in a failure to increase the capacity.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. The negative electrode mixture layer may include a conductive agent such as CNT.

For the negative electrode active material, a carbon material that reversibly occludes and releases lithium ions is typically used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is, for example, greater than or equal to 0.1 mass% and less than or equal to 5 mass% relative to the mass of the negative electrode mixture layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode Active Material]

A hydroxide containing Ni and Mn at a mole ratio of 1:1 and lithium hydroxide were mixed at a mole ratio of Ni: Mn: Li = 0.5:0.5:1.05, and the obtained mixture was heated at a temperature-rising rate of 1°C/min and calcined in air at 950°C for 10 hours. Subsequently, the calcined product was rapidly cooled in air to obtain a Li-Ni-Mn composite oxide. The obtained Li-Ni-Mn composite oxide was subjected to composition analysis using an ICP optical emission spectrometer (iCAP6300, manufactured by Thermo Fisher Scientific Inc.).

### [Production of Positive Electrode]

For the positive electrode active material, the Li-Ni-Mn composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

### [Preparation of Non-Aqueous Electrolyte Liquid]

Lithium hexafluorophosphate (LiPF₆) was dissolved in a mixed solvent of fluoroethylene carbonate (FEC) and methyl propionate (FMP) at a volume ratio of 1:3 so that the concentration was 1 mol/liter to prepare a non-aqueous electrolyte liquid.

### [Production of Test Cell]

For the negative electrode, a lithium metal foil was used. The positive electrode and the negative electrode were disposed to face each other with a separator interposed therebetween to form an electrode assembly. The electrode assembly and the non-aqueous electrolyte liquid were housed in a coin-shaped exterior housing can, and an opening portion of the exterior housing can was sealed with a gasket and a sealing assembly to prepare a test cell (non-aqueous electrolyte secondary battery).

### <Example 2>

A positive electrode active material and a test cell were produced in the same manner as in Example 1, except that, in the synthesizing step of the Li-Ni-Mn composite oxide, a hydroxide containing Ni and Mn at a mole ratio of 1:1 was mixed with lithium hydroxide at a mole ratio of Ni:Mn:Li = 0.5:0.5:1.11, and the obtained mixture was heated at a temperature-rising rate of 1°C/min and then calcined in air at 900°C for 3 hours.

### <Example 3>

A positive electrode active material and a test cell were produced in the same manner as in Example 2, except that, in the synthesizing step of the Li-Ni-Mn composite oxide, the calcining temperature was changed to 1000°C, and the calcining time was changed to 10 hours.

### <Example 4>

A positive electrode active material and a test cell were produced in the same manner as in Example 1, except that, in the synthesizing step of the Li-Ni-Mn composite oxide, a hydroxide containing Ni and Mn at a mole ratio of 6:4 was mixed with lithium hydroxide at a mole ratio of Ni:Mn:Li = 0.6:0.4:1.00, the obtained mixture was heated at a temperature-rising rate of 1°C/min and then calcined in air at 900°C for 10 hours, and the calcined product was washed with a sufficient amount of water and then heat-treated in a vacuum at 180°C for 2 hours.

### <Example 5>

A positive electrode active material and a test cell were produced in the same manner as in Example 1, except that, in the synthesizing step of the Li-Ni-Mn composite oxide, a hydroxide containing Ni and Mn at a mole ratio of 7:3 was mixed with lithium hydroxide at a mole ratio of Ni:Mn:Li = 0.7:0.3:1.05, the obtained mixture was heated at a temperature-rising rate of 1°C/min and then calcined in air at 800°C for 3 hours, and the calcined product was washed with a sufficient amount of water and then heat-treated in a vacuum at 180°C for 2 hours.

### <Example 6>

A positive electrode active material and a test cell were produced in the same manner as in Example 1, except that, in the synthesizing step of the Li-Ni-Mn composite oxide, a hydroxide containing Ni and Mn at a mole ratio of 7:3 was mixed with lithium hydroxide at a mole ratio of Ni:Mn:Li = 0.7:0.3:1.09, the obtained mixture was heated at a temperature-rising rate of 1°C/min and then calcined in air at 900°C for 3 hours, and the calcined product was washed with a sufficient amount of water and then heat-treated in a vacuum at 180°C for 2 hours.

### <Example 7>

A positive electrode active material and a test cell were produced in the same manner as in Example 1, except that, in the synthesizing step of the Li-Ni-Mn composite oxide, a hydroxide containing Ni, Mn, and Co at a mole ratio of 60:35:5 was mixed with lithium hydroxide at a mole ratio of Ni:Mn:Co:Li = 0.60:0.35:0.05:1.05, the obtained mixture was heated at a temperature-rising rate of 1°C/min and then calcined in air at 850°C for 3 hours, and the calcined product was washed with a sufficient amount of water and then heat-treated in a vacuum at 180°C for 2 hours.

### <Comparative Example 1>

A positive electrode active material and a test cell were produced in the same manner as in Example 1, except that, in the synthesizing step of the Li-Ni-Mn composite oxide, the calcining temperature was changed to 850°C, and the calcining time was changed to 5 hours.

### <Comparative Example 2>

A positive electrode active material and a test cell were produced in the same manner as in Example 2, except that, in the synthesizing step of the Li-Ni-Mn composite oxide, the calcining temperature was changed to 850°C, and the calcining time was changed to 10 hours.

### <Comparative Example 3>

A positive electrode active material and a test cell were produced in the same manner as in Example 2, except that, in the synthesizing step of the Li-Ni-Mn composite oxide, the calcining temperature was changed to 850°C, and the calcining time was changed to 3 hours.

For each of the Li-Ni-Mn composite oxides of Examples and Comparative Examples, the mixing ratio α and the strain β of Ni were determined by the above method. Table 1 shows the values thereof and the value of α × β.

### [Evaluation of Discharge Capacity]

Each of the test cells of Examples and Comparative Examples was charged at a constant current of 0.2 C until the battery voltage reached 4.5 V under a condition of 25°C, and then charged at a constant voltage of 4.65 V until the current value reached 0.02 C. The test cells were rested for 20 minutes and then discharged at a constant current of 0.2 C until the battery voltage reached 2.5 V to determine discharge capacities. Table 1 shows the measurement results of the discharge capacity together with the composition of the positive electrode active material, the mixing ratio α, and the strain β.

**[Table 1]**

| | Positive electrode active material | | | | Discharge capacity mAh/g |
|---|---|---|---|---|---|
| | Composition | Mixing ratio α | Strain β | α×β | |
| Example 1 | Li_{1.05}Ni_{0.5}Mn_{0.5}O_{2.11} | 0.191 | 0.270 | 0.0516 | 189.0 |
| Example 2 | Li_{1.11}Ni_{0.5}Mn_{0.5}O_{2.11} | 0.175 | 0.498 | 0.0872 | 174.0 |
| Example 3 | Li_{1.11}Ni_{0.5}Mn_{0.5}O_{2.11} | 0.162 | 0.261 | 0.0423 | 189.9 |
| Example 4 | Li_{1.00}Ni_{0.6}Mn_{0.4}O_{2.00} | 0.163 | 0.187 | 0.0305 | 189.6 |
| Example 5 | Li_{1.05}Ni_{0.7}Mn_{0.3}O_{2.05} | 0.129 | 0.131 | 0.0169 | 184.8 |
| Example 6 | Li_{1.09}Ni_{0.7}Mn_{0.3}O_{2.09} | 0.087 | 0.067 | 0.0058 | 211.0 |
| Example 7 | Li_{1.05}Ni_{0.60}Mn_{0.35}Co_{0.05}O_{2.05} | 0.121 | 0.139 | 0.0168 | 203.1 |
| Comparative Example 1 | Li_{1.05}Ni_{0.5}Mn_{0.5}O_{2.11} | 0.191 | 0.491 | 0.0938 | 163.9 |
| Comparative Example 2 | Li_{1.11}Ni_{0.5}Mn_{0.5}O_{2.11} | 0.164 | 0.558 | 0.0915 | 168.0 |
| Comparative Example 3 | Li_{1.11}Ni_{0.5}Mn_{0.5}O_{2.11} | 0.188 | 0.584 | 0.1100 | 153.9 |

As shown in Table 1, the test cells of Examples all had a higher capacity than the test cells of Comparative Examples. That is, in the layered rock-salt structure of the Li-Ni-Mn composite oxide, the battery capacity was significantly improved when the product (α × β) of the mixing ratio α and strain β was less than or equal to 0.090. When the value of α × β exceeded 0.090 as in the case of the positive electrode active materials of Comparative Examples, the high capacity cannot be achieved as in the case of using the positive electrode active materials of Examples.

In addition, the value of α × β of the Li-Ni-Mn composite oxide significantly varied depending on the synthesis conditions of the composite oxide. For example, as understood from Example 2 and Comparative Example 3, in the Li-Ni-Mn composite oxide having the same composition, when the calcining temperature changed by 50°C, the value of α × β significantly fluctuated (Example 2: 0.0872 and Comparative Example 3: 0.1100). As a result, the discharge capacities were also largely different (Example 2: 174.0 mAh/g and Comparative Example 3: 153.9 mAh/g). Furthermore, when the calcining temperature was raised to 1000°C to extend the calcining time, the value of α × β became 0.0423, and the discharge capacity became 189.9 mAh/g (see Example 3).

The present disclosure will be further described with the following embodiments.

Constitution 1: A positive electrode active material for a non-aqueous electrolyte secondary battery, the positive electrode active material having a crystal structure belonging to the space group R-3m, and being represented by a compositional formula:

Li₁₊ₐNi_{b}Mn_{c}X_{d}Oₑ

wherein X represents at least one selected from the group consisting of transition metal elements and main-group elements other than Li, Ni and Mn; a ≤ 1.15, 0.35 ≤ b ≤ 0.70, 0.30 ≤ c ≤ 0.65, and 0 ≤ d ≤ 0.07 are satisfied; and e is a value satisfying electroneutrality,
wherein a product (α × β) of a mixing ratio α of Ni determined by Rietveld analysis and a strain β determined by Williamson-Hall method is less than or equal to 0.090.

Constitution 2: The positive electrode active material for a non-aqueous electrolyte secondary battery according to Constitution 1, wherein the product (α × β) of the mixing ratio α and the strain β is greater than or equal to 0.002 and less than or equal to 0.072.

Constitution 3: The positive electrode active material for a non-aqueous electrolyte secondary battery according to Constitution 1 or 2, wherein the mixing ratio α is greater than or equal to 0.05 and less than or equal to 0.20.

Constitution 4: The positive electrode active material for a non-aqueous electrolyte secondary battery according to any one of Constitutions 1 to 3, wherein in the compositional formula Li₁₊ₐNi_{b}Mn_{c}X_{d}Oₑ, a mole ratio (b) of Ni is 0.50 ≤ b ≤ 0.60.

Constitution 5: The positive electrode active material for a non-aqueous electrolyte secondary battery according to any one of Constitutions 1 to 4, wherein in the compositional formula Li₁₊ₐNi_{b}Mn_{c}X_{d}Oₑ, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

Constitution 6: The positive electrode active material for a non-aqueous electrolyte secondary battery according to Constitution 5, wherein in the compositional formula Li₁₊ₐNi_{b}Mn_{c}X_{d}Oₑ, X represents at least one selected from the group consisting of Al and Co.

Constitution 7: A non-aqueous electrolyte secondary battery, comprising: a positive electrode including the positive electrode active material according to any one of Constitutions 1 to 6; a negative electrode; and a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, the positive electrode active material having a crystal structure belonging to a space group R-3m, and being represented by a compositional formula:
Li₁₊ₐNi_{b}Mn_{c}X_{d}Oₑ
wherein X represents at least one selected from the group consisting of transition metal elements and main-group elements other than Li, Ni and Mn; a ≤ 1.15, 0.35 ≤ b ≤ 0.70, 0.30 ≤ c ≤ 0.65, and 0 ≤ d ≤ 0.07 are satisfied; and e is a value satisfying electroneutrality,
wherein a product (α × β) of a mixing ratio α of Ni determined by Rietveld analysis and a strain β determined by Williamson-Hall method is less than or equal to 0.090.

2. The positive electrode active material for a non-aqueous electrolyte secondary battery according to claim 1, wherein the product (α × β) of the mixing ratio α and the strain β is greater than or equal to 0.002 and less than or equal to 0.072.

3. The positive electrode active material for a non-aqueous electrolyte secondary battery according to claim 2, wherein the mixing ratio α is greater than or equal to 0.05 and less than or equal to 0.20.

4. The positive electrode active material for a non-aqueous electrolyte secondary battery according to claim 3, wherein in the compositional formula Li₁₊ₐNi_{b}Mn_{c}X_{d}Oₑ, a mole ratio (b) of Ni is 0.50 ≤ b ≤ 0.60.

5. The positive electrode active material for a non-aqueous electrolyte secondary battery according to claim 3, wherein in the compositional formula Li₁₊ₐNi_{b}Mn_{c}X_{d}Oₑ, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

6. The positive electrode active material for a non-aqueous electrolyte secondary battery according to claim 5, wherein in the compositional formula Li₁₊ₐNi_{b}Mn_{c}X_{d}Oₑ, X represents at least one selected from the group consisting of Al and Co.

7. A non-aqueous electrolyte secondary battery, comprising:
a positive electrode including the positive electrode active material according to any one of claims 1 to 6;
a negative electrode; and
a non-aqueous electrolyte.
